# FASCICULE DE BREVET EUROPEEN

(11) **EP 3 250 726 B1**
(45) Date de publication et mention de la délivrance du brevet: **15.04.2020**
(21) Numéro de dépôt: 16704481.7
(22) Date de dépôt: 01.02.2016
(51) Int. Cl.: C23C 2/06, C23C 2/26, C23C 22/05, C23C 22/78, C23C 22/82, C23F 11/14, B32B 7/12, B32B 15/01, C25D 3/22, C25D 3/56, C25D 5/48, B32B 37/12, C23C 22/07, C23C 22/53, C23C 22/68, C23C 22/83

(54) **PROCÉDÉ DE PRÉPARATION D'UNE TÔLE REVÊTUE COMPRENANT L'APPLICATION D'UNE SOLUTION AQUEUSE COMPRENANT UN AMINOACIDE ET UTILISATION ASSOCIÉE POUR AMÉLIORER LA COMPATIBILITÉ AVEC UN ADHÉSIF**
VERFAHREN ZUR HERSTELLUNG EINES BESCHICHTETEN BLECHS, MIT ANWENDUNG EINER WÄSSRIGEN LÖSUNG MIT AMINOSÄURE, UND ZUGEHÖRIGE VERWENDUNG ZUR VERBESSERUNG DER KOMPATIBILITÄT MIT EINEM KLEBSTOFF
METHOD FOR THE PRODUCTION OF A COATED METAL SHEET, COMPRISING THE APPLICATION OF AN AQUEOUS SOLUTION CONTAINING AN AMINO ACID, AND ASSOCIATED USE IN ORDER TO IMPROVE COMPATIBILITY WITH AN ADHESIVE

(30) Priorité: 30.01.2015 WO PCT/IB2015/050723
(43) Date de publication de la demande: 06.12.2017
(73) Titulaire: ArcelorMittal, 1160 Luxembourg (LU)
(72) Inventeur: RACHIELE, Lydia, 57120 Rombas (FR); DERULE, Herve, 57645 Montoy Flanville (FR); THAÏ, Delphine, 57310 Bousse (FR)
(74) Mandataire: Lavoix
(86) Numéro de dépôt international: PCT/IB2016/050507
(87) Numéro de publication internationale: WO 2016/120856

(56) Documents cités:
- EP-A1- 2 458 031
- WO-A1-2013/160568
- JP-A- 408 296 053
- JP-A- 2007 284 710
- US-A1- 2014 360 630
- US-B1- 6 432 220

## Description

La présente invention est relative à une tôle comprenant un substrat en acier présentant deux faces dont au moins l'une est revêtue par un revêtement métallique comprenant au moins 40% en poids de zinc, à son procédé de préparation et à l'utilisation d'un aminoacide pour améliorer la compatibilité des tôles revêtues de revêtements à base de zinc avec un adhésif.

Avant d'être utilisées, les tôles en acier revêtues sont généralement soumises à divers traitements de surface.

La demande WO 2008/076684 décrit l'application sur une tôle en acier revêtue de zinc, sur une tôle en acier électrozinguée ou sur une tôle en acier galvanisée d'une composition de prétraitement consistant en une solution aqueuse comprenant un composé comprenant un métal du groupe IIIB (Sc, Y, La, Ac) ou du groupe IVB (Ti, Zr, Hf, Rf) et un composé à base de cuivre, par exemple de l'aspartate ou du glutamate de cuivre, suivie de l'application d'une composition comprenant une résine filmogène et un composé à base d'yttrium. Ce traitement avec un composé à base de cuivre est décrit comme améliorant l'adhérence entre la tôle et la couche ultérieure, telle qu'une peinture cataphorétique, et sa résistance à la corrosion.

La demande EP 2 458 031 décrit l'application sur une tôle en acier galvanisée GI, ou galvanisée alliée GA, d'une solution de traitement de conversion comprenant un composé (A) choisi parmi les composés de titane ou de zirconium hydrosolubles et un composé organique (B) qui peut notamment être de la glycine, de l'alanine, de l'asparagine, de l'acide glutamique ou aspartique sous forme neutre ou de sel. Selon cette demande, le composé (A) forme sur la tôle un film de conversion qui améliore la compatibilité de la tôle avec les revêtements appliqués ultérieurement, tels que les peintures cataphorétiques, et sa résistance à la corrosion. Le composé (B) est décrit comme stabilisant le composé (A).

Ces tôles en acier revêtues sont par exemple destinées au domaine de l'automobile. Les revêtements métalliques comprenant essentiellement du zinc sont traditionnellement utilisés pour leur bonne protection contre la corrosion.

Dans l'industrie automobile notamment, les tôles sont fréquemment assemblées au moyen d'adhésifs pour la réalisation de certaines parties des véhicules, telles que, par exemple, des seuils de porte.

Dans l'industrie automobile, l'association d'une tôle avec un adhésif est habituellement évaluée au moyen d'un test de traction sur une éprouvette formée de deux languettes de la tôle, ces languettes étant collées sur une partie de leur surface par l'adhésif.

A cette occasion, on évalue d'une part l'adhérence de l'adhésif sur la tôle par la mesure de la contrainte de traction à la rupture et d'autre part la compatibilité de l'adhésif et de la tôle par détermination visuelle de la nature de la rupture.

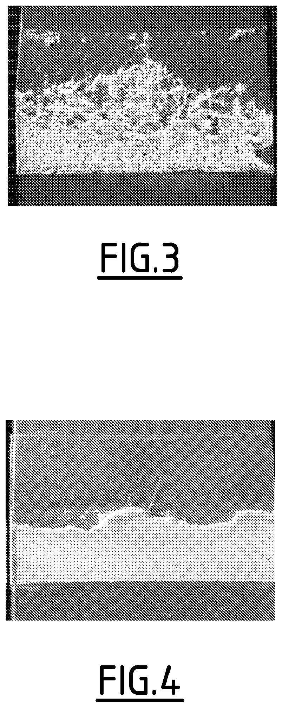

On peut à cette occasion observer principalement trois types, ou faciès, de rupture :
- la rupture cohésive, lorsque la rupture a lieu dans l'épaisseur de l'adhésif,
- la rupture adhésive (fig. 4), lorsque la rupture a lieu à une des interfaces entre les languettes et l'adhésif,
- la rupture cohésive superficielle (fig. 3), lorsque la rupture a lieu dans l'adhésif au voisinage d'une interface entre les languettes et l'adhésif.

Dans l'industrie automobile, on cherche à éviter les ruptures adhésives qui traduisent une mauvaise compatibilité de l'adhésif avec la tôle, et ce tant avant vieillissement de la colle qu'après vieillissement.

Or, les tests de traction font apparaître trop de ruptures adhésives lors de l'utilisation de certains adhésifs habituels pour l'industrie automobile sur les tôles revêtues de zinc.

De telles proportions de rupture adhésive ne sont pas acceptables pour les constructeurs automobiles, ce qui pourrait limiter l'usage de ces revêtements pour certaines applications.

Un des buts de l'invention est donc de proposer un procédé de préparation d'une tôle en acier revêtue par un revêtement métallique comprenant au moins 40% en poids de zinc qui présente une meilleure compatibilité avec les adhésifs et limite donc les risques de rupture adhésive.

Un autre des buts de l'invention est de proposer un procédé présentant en outre une meilleure compatibilité avec les adhésifs même après vieillissement de ceux-ci.

Il est également connu que les procédés de décapage chimique ou électrochimique, de recuit sous certaines conditions atmosphériques, de galvanisation ou encore d'électrozinguage génèrent une absorption d'hydrogène par l'acier. Cet hydrogène crée une fragilisation et peut être éliminé par un traitement thermique de dégazage, qui consiste typiquement en un recuit base à une température de l'ordre de 200°C. Un tel traitement est généralement réalisé à la fin du procédé de préparation de la tôle, typiquement après l'étape d'application d'un film de graisse ou d'huile sur la surface extérieure 15 du revêtement métallique 7

La demande fournit un procédé de préparation d'une tôle en acier revêtue par un revêtement métallique comprenant au moins 40% en poids de zinc qui conserve avantageusement une meilleure compatibilité avec les adhésifs après un traitement thermique de dégazage.

A cet effet, l'invention concerne un procédé selon la revendication 1.

Le procédé peut également comprendre les caractéristiques des revendications 2 à 13, prises isolément ou en combinaison.

L'invention concerne également une tôle selon la revendication 14 à 17, un assemblage selon la revendication 18 et l'utilisation selon la revendication 19.

L'invention va à présent être illustrée par des exemples donnés à titre indicatif, et non limitatif, et en référence aux figures annexées sur lesquelles :
- la figure 1 est une vue schématique en coupe illustrant la structure d'une tôle 1 obtenue par un procédé selon l'invention,
- la figure 2 est un vue schématique illustrant une éprouvette utilisée pour un test de traction, ou un assemblage selon l'invention, et
- les figures 3 et 4 sont des clichés montrant respectivement une rupture cohésive superficielle et une rupture adhésive.

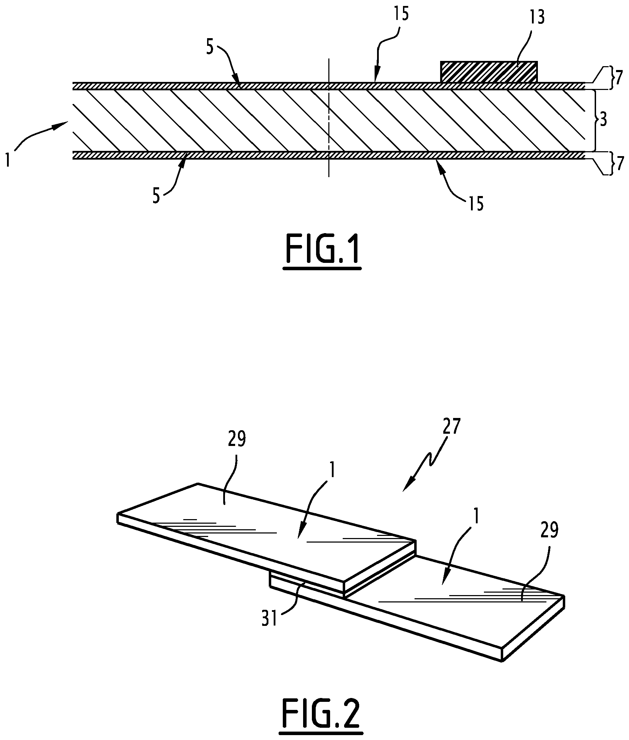

La tôle 1 de la figure 1 comprend un substrat 3 en acier recouvert sur chacune de ses deux faces 5 par un revêtement métallique 7. On observera que les épaisseurs relatives du substrat 3 et des revêtements 7 le recouvrant n'ont pas été respectées sur la figure 1 afin de faciliter la représentation.

Les revêtements 7 présents sur les deux faces 5 sont analogues et un seul sera décrit en détail par la suite. En variante (non-représentée), seule une des faces 5 présente un revêtement métallique 7.

Le revêtement métallique 7 comprend plus de 40% en poids de zinc, notamment plus de 50% en poids de zinc, de préférence plus de 70% en poids de zinc, plus préférentiellement plus de 90%, de préférence plus de 95%, de préférence plus de 99%. Le complément peut être constitué des éléments métalliques Al, Mg, Si, Fe, Sb, Pb, Ti, Ca, Sr, Mn, Sn, La, Ce, Cr, Ni ou Bi, pris seul ou en combinaison. La mesure de la composition d'un revêtement est généralement réalisée par dissolution chimique du revêtement. Le résultat donné correspond à une teneur moyenne dans l'ensemble de la couche.

Le revêtement métallique 7 peut comprendre plusieurs couches successives de compositions différentes, chacune de ces couches comprenant plus de 40% en poids de zinc (ou plus, comme défini ci-dessus). Le revêtement métallique 7, ou l'une de ses couches constitutives, peut également présenter un gradient de concentration en un élément métallique donné. Lorsque le revêtement métallique 7, ou l'une de ses couches constitutives, présente un gradient de concentration en zinc, la proportion moyenne en zinc dans le revêtement métallique 7, ou dans cette couche constitutive, est de plus de 40% en poids de zinc (ou plus, comme défini ci-dessus).

Pour réaliser la tôle 1, on peut par exemple procéder comme suit.

Le procédé peut comprendre une étape préalable de préparation du substrat 3 en acier présentant deux faces 5, dont au moins l'une est revêtue par un revêtement métallique 7 comprenant au moins 40% en poids de zinc. On utilise un substrat 3 en acier obtenu par exemple par laminage à chaud puis à froid. Le revêtement métallique 7 comprenant plus de 40% en poids de zinc peut être déposé sur le substrat 3 par toute méthode de dépôt connue, notamment par électrozingage, dépôt en phase vapeur (« physical vapor deposition » PVD en anglais), dépôt par jet de vapeur sonique (« Jet Vapor Déposition » JVD en anglais) ou galvanisation à chaud au trempé.

Selon une première alternative, le substrat 3 en acier présentant deux faces 5, dont au moins l'une est revêtue par un revêtement métallique 7 comprenant au moins 40% en poids de zinc est obtenu par électrozingage du substrat 3 en acier. L'application du revêtement peut avoir lieu sur une face (la tôle 1 ne comprend alors qu'un revêtement métallique 7), ou sur deux faces (la tôle 1 comprend alors deux revêtements métalliques 7).

Selon une deuxième alternative, le substrat 3 en acier présentant deux faces 5, dont au moins l'une est revêtue par un revêtement métallique 7 comprenant au moins 40% en poids de zinc est obtenu par galvanisation à chaud du substrat 3 en acier.

Selon une troisième alternative, le substrat 3 en acier présentant deux faces 5, dont au moins l'une est revêtue par un revêtement métallique 7 comprenant au moins 40% en poids de zinc est obtenu indifféremment par électrozingage du substrat 3 en acier ou par galvanisation à chaud du substrat 3 en acier.

Généralement, le substrat 3 est alors sous forme d'une bande que l'on fait défiler dans un bain pour déposer le revêtement métallique 7 par trempé à chaud. La composition du bain varie selon que la tôle 1 désirée est une tôle en acier galvanisée GI (« galvanized steel sheet » en anglais), GA (galvanisé allié ou « galvannealed steel sheet » en anglais) ou une tôle revêtue par un alliage de zinc et de magnésium, un alliage de zinc et d'aluminium ou un alliage de zinc, de magnésium et d'aluminium. Le bain peut également contenir jusqu'à 0,3% en poids d'éléments optionnels additionnels tels que Si, Sb, Pb, Ti, Ca, Mn, Sn, La, Ce, Cr, Ni ou Bi. Ces différents éléments additionnels peuvent notamment permettre d'améliorer la ductilité ou l'adhésion du revêtement métallique 7 sur le substrat 3. L'homme du métier, qui connaît leurs effets sur les caractéristiques du revêtement métallique 7, saura les employer en fonction du but complémentaire recherché. Le bain peut enfin contenir des éléments résiduels provenant des lingots d'alimentation, ou résultant du passage du substrat 3 dans le bain, source d'impuretés inévitables dans le revêtement métallique 7.

Dans un mode de réalisation, le substrat 3 en acier présentant deux faces 5, dont au moins l'une est revêtue par un revêtement métallique 7 comprenant au moins 40% en poids de zinc, est une tôle en acier galvanisée GI. Le revêtement métallique 7 est alors un revêtement de zinc GI. Un tel revêtement comprend plus de 99% en poids de zinc.

Dans un autre mode de réalisation, le substrat 3 en acier présentant deux faces 5, dont au moins l'une est revêtue par un revêtement métallique 7 comprenant au moins 40% en poids de zinc est une tôle en acier galvanisée GA. Le revêtement métallique 7 est alors un revêtement de zinc GA. Une tôle en acier galvanisée GA est obtenue par recuit (« annealing » en anglais) d'une tôle en acier galvanisée GI. Dans ce cas, le procédé comprend donc une étape de galvanisation à chaud du substrat 3 en acier, puis une étape de recuit. Le recuit provoque la diffusion du fer du substrat 3 en acier dans le revêtement métallique 7. Le revêtement métallique 7 d'une tôle GA comprend typiquement de 10% à 15% en poids de fer.

Dans un autre mode de réalisation, le revêtement métallique 7 est un alliage de zinc et d'aluminium. Le revêtement métallique 7 peut par exemple comprendre 55% en poids d'aluminium, 43,5% en poids de zinc et 1,5% en poids de silicium, comme l'Aluzinc® vendu par ArcelorMittal.

Dans un autre mode de réalisation, le revêtement métallique 7 est un alliage de zinc et de magnésium, comprenant de préférence plus de 70% en poids de zinc. Les revêtements métalliques comprenant du zinc et du magnésium seront globalement désignés ici sous le terme de revêtements zinc-magnésium ou ZnMg. L'ajout de magnésium au revêtement métallique 7 augmente nettement la résistance à la corrosion de ces revêtements, ce qui peut permettre de réduire leur épaisseur ou d'augmenter la garantie de protection contre la corrosion dans le temps.

Le revêtement métallique 7 peut notamment être un alliage de zinc, de magnésium et d'aluminium, comprenant de préférence plus de 70% en poids de zinc. Les revêtements métalliques comprenant du zinc, du magnésium et de l'aluminium seront globalement désignés ici sous le terme de revêtements zinc- aluminium- magnésium ou ZnAIMg. L'ajout d'aluminium (typiquement de l'ordre de 0,1% en poids) à un revêtement à base de zinc et de magnésium permet également d'améliorer la résistance à la corrosion, et rend la tôle revêtue plus facile à être mise en forme. Ainsi, les revêtements métalliques comprenant essentiellement du zinc sont à présent concurrencés par les revêtements comprenant du zinc, du magnésium et éventuellement de l'aluminium.

Typiquement, le revêtement métallique 7 de type ZnMg ou ZnAIMg comprend entre 0,1 et 10% en poids, typiquement entre 0,3 et 10% en poids, notamment entre 0,3 et 4% en poids de magnésium. En dessous de 0,1% en poids de Mg, la tôle revêtue résiste moins bien à la corrosion et au-delà de 10% en poids de Mg, le revêtement ZnMg ou ZnAIMg s'oxyde trop et ne peut être utilisé.

Au sens de la présente demande, lorsqu'une plage de chiffre est décrite comme étant entre une borne basse et une borne haute, il est sous-entendu que ces bornes sont inclues. Par exemple un revêtement comprenant 0,1% ou 10% en poids de magnésium est inclut lorsque l'expression « Le revêtement métallique 7 comprend entre 0,1 et 10% en poids de magnésium » est utilisée.

Le revêtement métallique 7 de type ZnAIMg comprend de l'aluminium, typiquement entre 0,5 et 11% en poids, notamment entre 0,7 et 6% en poids, de préférence entre 1 et 6% en poids d'aluminium. Typiquement, le rapport massique entre le magnésium et l'aluminium dans le revêtement métallique 7 de type ZnAIMg est strictement inférieur ou égal à 1, de préférence strictement inférieur à 1, et de préférence encore strictement inférieur à 0,9.

L'impureté inévitable la plus courante présents dans le revêtement métallique 7 et résultant du passage du substrat dans le bain est le fer qui peut être présent à une teneur allant jusqu'à 3% en poids, généralement inférieure ou égale à 0,4% en poids, typiquement comprise entre 0,1 et 0,4% en poids par rapport au revêtement métallique 7.

Les impuretés inévitables provenant des lingots d'alimentation, pour les bains ZnAIMg, sont généralement le plomb (Pb), présent à une teneur inférieure à 0,01% en poids par rapport au revêtement métallique 7, le Cadmium (Cd), présent à une teneur inférieure à 0,005% en poids par rapport au revêtement métallique 7et l'étain (Sn), présent à une teneur inférieure à 0,001% en poids par rapport au revêtement métallique 7.

Des éléments additionnels choisis parmi Si, Sb, Pb, Ti, Ca, Mn, Sn, La, Ce, Cr, Ni ou Bi peuvent être présents dans le revêtement métallique 7. La teneur en poids de chaque élément additionnel est généralement inférieure à 0,3%.

Le revêtement métallique 7 a généralement une épaisseur inférieure ou égale à 25 µm et vise de manière classique à protéger le substrat 3 en acier contre la corrosion.

Après dépôt du revêtement métallique 7, le substrat 3 est par exemple essoré au moyen de buses projetant un gaz de part et d'autre du substrat 3.

On laisse ensuite refroidir le revêtement métallique 7 de façon contrôlée pour qu'il se solidifie. Le refroidissement contrôlé du revêtement métallique 7 est assuré à une vitesse de préférence supérieure ou égale à 15°C/s ou encore supérieure à 20°C/s entre le début de la solidification (c'est-à-dire lorsque le revêtement métallique 7 tombe juste sous la température du liquidus) et la fin de solidification (c'est-à-dire lorsque le revêtement métallique 7 atteint la température du solidus).

En variante, l'essorage peut être adapté pour enlever le revêtement métallique 7 déposé sur une face 5 de sorte qu'une seule des faces 5 de la tôle 1 ne soit en définitive revêtue par un revêtement métallique 7.

La bande ainsi traitée peut ensuite être soumise à une étape dite de skin-pass qui permet de l'écrouir et lui conférer une rugosité facilitant sa mise en forme ultérieure.

La surface extérieure 15 du revêtement métallique 7 est soumise à une étape de traitement de surface qui consiste à leur appliquer une solution aqueuse comprenant un aminoacide choisi parmi l'alanine, l'arginine, l'acide aspartique, l'acide glutamique, la cystéine, la glycine, la lysine, la méthionine, la proline, la thréonine, la valine, et un mélange de ceux-ci. Chaque aminoacide peut être sous forme neutre ou de sel. Au sens de la demande, un aminoacide est un des 22 aminoacides protéinogènes (isomère L) ou un de leurs isomères, notamment leurs isomères D. L'aminoacide est de préférence un aminoacide L pour des raisons de coût.

L'invention repose sur la découverte inattendue que l'application sur la surface extérieure 15 du revêtement métallique 7 d'une solution aqueuse comprenant un aminoacide de la liste définie ci-dessus permet d'améliorer l'adhérence d'un adhésif sur la tôle revêtue obtenue. Cette amélioration n'est pas observée quel que soit l'aminoacide utilisé. Par exemple, l'adhérence d'un adhésif n'a pas été améliorée en appliquant de la glutamine ou de la serine sur une tôle revêtue par un revêtement métallique 7 comprenant au moins 40% en poids de zinc. Aucune théorie n'a pour l'instant été mise en avant pour expliquer pourquoi certains aminoacides permettent d'améliorer l'adhérence d'un adhésif et pas d'autres.

La solution aqueuse appliquée peut comprendre un aminoacide choisi parmi l'alanine, l'arginine, l'acide aspartique, l'acide glutamique, la glycine, la lysine, la méthionine, la proline, la thréonine, la valine, et un mélange de ceux-ci, chaque aminoacide étant sous forme neutre ou de sel.

La solution aqueuse appliquée peut comprendre un aminoacide choisi parmi l'alanine, l'acide aspartique, l'acide glutamique, la cystéine, la glycine, la méthionine, la proline, la thréonine, la valine, et un mélange de ceux-ci, chaque aminoacide étant sous forme neutre ou de sel.

La solution aqueuse appliquée peut comprendre un aminoacide choisi parmi l'alanine, l'acide aspartique, l'acide glutamique, la cystéine, la méthionine, la proline, la thréonine et la valine, et un mélange de ceux-ci, chaque aminoacide étant sous forme neutre ou de sel.

La solution aqueuse appliquée peut comprendre un aminoacide choisi parmi l'alanine, l'acide aspartique, l'acide glutamique, la méthionine, la proline, la thréonine et la valine, et un mélange de ceux-ci, chaque aminoacide étant sous forme neutre ou de sel.

De préférence, dans la première alternative dans laquelle la tôle 1 est une tôle en acier électrozinguée, l'aminoacide de la solution aqueuse appliquée est choisi parmi l'acide aspartique, l'acide glutamique, la cystéine, la méthionine, la proline et la thréonine, et un mélange de ceux-ci, chaque aminoacide étant sous forme neutre ou de sel, en particulier parmi l'acide aspartique, l'acide glutamique, la méthionine, la proline et la thréonine, et un mélange de ceux-ci, chaque aminoacide étant sous forme neutre ou de sel.

De préférence, dans la deuxième alternative dans laquelle la tôle 1 est une tôle obtenue par galvanisation à chaud du substrat 3 en acier, l'aminoacide de la solution aqueuse appliquée est choisi parmi l'alanine, l'acide glutamique, la proline, la thréonine et la valine, et un mélange de ceux-ci, chaque aminoacide étant sous forme neutre ou de sel.

De préférence, dans la troisième alternative dans laquelle la tôle 1 est indifféremment une tôle en acier électrozinguée ou une tôle obtenue par galvanisation à chaud du substrat 3 en acier, l'aminoacide de la solution aqueuse appliquée est choisi parmi l'acide glutamique, la proline, la thréonine et un mélange de ceux-ci, chaque aminoacide étant sous forme neutre ou de sel.

L'aminoacide est notamment choisi parmi la proline sous forme neutre ou de sel, la cystéine sous forme neutre ou de sel, et un mélange de celles-ci. La proline est particulièrement efficace pour améliorer l'adhérence de l'adhésif. La cystéine permet avantageusement de doser la quantité d'aminoacide déposé en surface grâce à sa fonction thiol, par exemple par spectrométrie de fluorescence X (SFX).

De préférence, l'aminoacide est choisi parmi la proline sous forme neutre ou de sel, la thréonine sous forme neutre ou de sel, et un mélange de celles-ci. La proline et la thréonine permettent en effet non seulement d'améliorer la compatibilité de la surface de la tôle avec un adhésif, mais aussi d'améliorer la résistance à la corrosion de la tôle et les propriétés tribologiques de la surface de la tôle (ce qui la rend bien adaptée à sa mise en forme ultérieure, notamment par emboutissage).
L'amélioration de la résistance à la corrosion peut par exemple être mise en évidence en faisant des tests selon les normes ISO 6270-2 de 2005 et/ou VDA 230-213 de 2008, et l'amélioration des propriétés tribologiques peut par exemple être mise en évidence en mesurant le coefficient de frottement (µ) en fonction de la pression de contact (MPa), par exemple de de 0 à 80 MPa.
Il est particulièrement surprenant que la thréonine et/ou la proline permettent d'améliorer ces trois propriétés à la fois. Dans les conditions testées, les autres aminoacides n'ont pas permis une amélioration de ces trois propriétés sur tout type de revêtement métallique comprenant au moins 40% en poids de zinc (au mieux, les autres aminoacides ont permis d'observer une amélioration de deux de ces propriétés, mais pas des trois).

La solution aqueuse appliquée comprend généralement de 1 à 200 g/L, notamment de 5 g/L à 150 g/L, typiquement de 5 g/L à 100 g/L, par exemple de 10 à 50 g/L d'aminoacide sous forme neutre ou de sel ou de mélange d'aminoacide sous forme neutres ou de sels. L'amélioration la plus importante de la compatibilité du revêtement métallique 7 de la tôle 1 avec l'adhésif 13 a été observée en utilisant une solution aqueuse comprenant de 5 g/L à 100 g/L, en particulier de 10 à 50 g/L d'aminoacide ou de mélange d'aminoacide.

La solution aqueuse appliquée comprend généralement de 10 à 1750 mmol/L, notamment de 40 mmol/L à 1300 mmol/L, typiquement de 40 mmol/L à 870 mmol/L, par exemple de 90 à 430 mmol /L d'aminoacide sous forme neutre ou de sel ou de mélange d'aminoacide sous forme neutres ou de sels. L'amélioration la plus importante de la compatibilité du revêtement métallique 7 de la tôle 1 avec l'adhésif 13 a été observée en utilisant une solution aqueuse comprenant de 40 mmol/L à 870 mmol/L, en particulier de 90 à 430 mmol/L d'aminoacide ou de mélange d'aminoacide.

Bien entendu, les proportions massiques et molaires de l'aminoacide (ou de chacun des aminoacides quand un mélange d'aminoacides est utilisé) dans la solution aqueuse ne peuvent être supérieures aux proportions correspondant à la limite de solubilité de l'aminoacide à la température à laquelle la solution aqueuse est appliquée.

Généralement, le pourcentage massique en extrait sec de l'aminoacide sous forme neutre ou de sel ou du mélange d'aminoacides sous forme neutres ou de sels dans la solution aqueuse est supérieur ou égal à 50%, notamment supérieur ou égal à 65%, typiquement supérieur ou égal à 75%, notamment supérieur ou égal à 90%, de préférence supérieur ou égal à 95%. De même, généralement, le pourcentage molaire en extrait sec de l'aminoacide sous forme neutre ou de sel dans la solution aqueuse est supérieur ou égal à 50%, typiquement supérieur ou égal à 75%, notamment supérieur ou égal à 90%, de préférence supérieur ou égal à 95%.

La solution aqueuse peut comprendre du sulfate de zinc et/ou du sulfate de fer. La proportion en sulfate de zinc dans la solution aqueuse est généralement inférieure à 80 g/L, de préférence inférieure à 40 g/L. De préférence, la solution aqueuse est exempte de sulfate de zinc et de sulfate de fer. Généralement, la solution aqueuse comprenant un aminoacide comprend moins de 10g/L, typiquement moins de 1g/L, généralement moins de 0,1 g/L, notamment moins de 0,05 g/L, par exemple moins de 0,01 g/L d'ions zinc. De préférence, la solution aqueuse est exempte d'ion zinc (outre les traces inévitables, qui pourraient par exemple provenir de la pollution, par le substrat, du bain de la solution aqueuse).

La solution aqueuse comprenant un aminoacide comprend généralement moins de 0,005 g/L d'ions fer. La solution aqueuse comprenant un aminoacide comprend généralement peu d'ions métalliques autres que le potassium, le sodium, le calcium et le zinc, typiquement moins de 0,1 g/L, notamment moins de 0,05 g/L, par exemple moins de 0,01 g/L, de préférence moins de 0,005 g/L d'ions métalliques autres que le potassium, le sodium, le calcium et le zinc. Typiquement, la solution aqueuse est exempte d'ions métalliques autres que le zinc, le sodium, le calcium et le potassium. La solution aqueuse comprenant un aminoacide comprend généralement peu d'ions métalliques autres que le zinc, typiquement moins de 0,1 g/L, notamment moins de 0,05 g/L, par exemple moins de 0,01 g/L, de préférence moins de 0,005 g/L d'ions métalliques autres que le zinc. Typiquement, la solution aqueuse est exempte d'ions métalliques autres que le zinc. En particulier, la solution aqueuse comprenant un aminoacide comprend généralement peu d'ions cobalt et/ou nickel, typiquement moins de 0,1 g/L, notamment moins de 0,05 g/L, par exemple moins de 0,01g/L d'ions cobalt et/ou nickel. De préférence, la solution aqueuse est exempte d'ions cobalt et/ou exempte d'ions nickel et/ou exempte d'ions cuivre et/ou exempte d'ions chrome. La solution aqueuse est exempte de composé comprenant un métal du groupe IIIB (Sc, Y, La, Ac) ou du groupe IVB (Ti, Zr, Hf, Rf). De préférence, elle est exempte d'ions métalliques (outre les impuretés métalliques inévitables, qui pourraient par exemple provenir de la pollution, par le substrat, du bain de la solution aqueuse).

De façon générale, l'absence d'ions métalliques dans la solution aqueuse permet d'éviter de perturber l'action du principe actif qu'est l'aminoacide ou le mélange d'aminoacides.

De plus, la solution aqueuse comprenant un aminoacide comprend généralement moins de 0,1 g/L, notamment moins de 0,05 g/L, par exemple moins de 0,01 g/L de composés comprenant du chrome VI, ou plus généralement du chrome. Généralement, elle est exempte de composés comprenant du chrome VI, ou plus généralement du chrome.

Par ailleurs, la solution aqueuse est généralement exempte d'agent oxydant.

Par ailleurs, la solution aqueuse est généralement exempte de résine, en particulier de résine organique. Une résine désigne un produit polymère (naturel, artificiel ou synthétique) qui est une matière première pour fabriquer par exemple des matières plastiques, textiles, peintures (liquides ou en poudre), adhésifs, vernis, mousses de polymère. Elle peut être thermoplastique ou thermodurcissable. De manière plus générale, la solution aqueuse est généralement exempte de polymère.

L'absence de résine permet d'obtenir une couche de traitement de faible épaisseur et d'ainsi faciliter son élimination lors du dégraissage précédant la phosphatation et la mise en peinture. Une résine a, dans ces conditions, tendance à laisser des résidus qui perturbent la phosphatation.

Le pH de la solution aqueuse appliquée est généralement compris d'un pH égal au [point isoélectrique de l'aminoacide - 3] à un pH égal au [point isoélectrique de l'aminoacide + 3], notamment d'un pH égal au [point isoélectrique de l'aminoacide - 2] à un pH égal au [point isoélectrique de l'aminoacide + 2], de préférence d'un pH égal au [point isoélectrique de l'aminoacide - 1] à un pH égal au [point isoélectrique de l'aminoacide + 1]. Par exemple, lorsque l'aminoacide est la proline dont le point isoélectrique est de 6,3, le pH de la solution aqueuse est généralement de 3,3 à 9,3, notamment de 4,3 à 8,3, de préférence de 5,3 à 7,3.

Le pH de la solution aqueuse appliquée est généralement compris d'un pH égal au [point isoélectrique de l'aminoacide - 3] à un pH égal au [point isoélectrique de l'aminoacide + 1], de préférence d'un pH égal au [point isoélectrique de l'aminoacide - 3] à un pH égal au [point isoélectrique de l'aminoacide - 1], notamment d'un pH égal au [point isoélectrique de l'aminoacide - 2,5] à un pH égal au [point isoélectrique de l'aminoacide - 1,5], typiquement un pH égal au [point isoélectrique de l'aminoacide - 2]. Par exemple, lorsque l'aminoacide est la proline dont le point isoélectrique est de 6,3, le pH de la solution aqueuse est de préférence de 3,3 à 5,3, notamment de 3,8 à 4,8, typiquement de l'ordre de 4,0, comme 4,3. Un tel pH permet en effet de favoriser la liaison entre l'aminoacide et le revêtement métallique 7. En particulier, un procédé mis en œuvre avec une solution ayant un tel pH permet d'obtenir une tôle qui conserve ses propriétés de compatibilité avec les adhésifs améliorées, même lorsqu'elle a subi un traitement de lavage/rehuilage. Généralement, une fois que la tôle selon l'invention a été préparée, elle peut être découpée en flan avant sa mise en forme, typiquement par emboutissage. Afin d'éliminer les impuretés déposées sur la tôle issues de cette découpe, un traitement de lavage/rehuilage peut être mis en œuvre. Celui-ci consiste à appliquer sur les surfaces de la tôle une huile de faible viscosité, puis à brosser, puis à appliquer une huile de viscosité plus importante. Sans vouloir être lié par une théorie particulière, on suppose qu'une solution ayant un tel pH permet d'obtenir l'aminoacide sous forme protonée (NH₃⁺), ce qui favoriserait la liaison entre l'aminoacide et le revêtement métallique 7 et donc le maintien de l'aminoacide à la surface malgré le traitement de lavage/rehuilage. A des pH différents et notamment supérieurs au [point isoélectrique de l'aminoacide - 1], l'amine de l'aminoacide est peu ou pas protonée : les liaisons entre l'aminoacide et le revêtement métallique 7 seraient moins fortes et l'aminoacide aurait plus tendance à se dissoudre dans l'huile utilisée lors du traitement de lavage/rehuilage, conduisant à son élimination au moins partielle, et donc à de moins bonnes propriétés de compatibilité de la tôle ayant subi un tel traitement avec les adhésifs.

L'homme du métier sait comment adapter le pH de la solution aqueuse, par ajout d'une base s'il souhaite augmenter le pH, ou d'un acide, tel que l'acide phosphorique, s'il souhaite le diminuer.

Au sens de la demande, une base ou un acide est indifféremment sous forme neutre et/ou de sel. Généralement, la proportion en acide est inférieure à 10 g/L, notamment 1 g/L dans la solution. De préférence, l'acide phosphorique est ajouté conjointement sous forme neutre et sous forme de sel (par exemple de sodium, de calcium ou encore de potassium) par exemple en mélange H₃PO₄/NaH₂PO₄. L'acide phosphorique permet avantageusement de doser la quantité de solution aqueuse (et donc d'acide aminé) déposée en surface grâce aux phosphore et/ou sodium, par exemple par spectrométrie de fluorescence X (SFX).

Dans un mode de réalisation, la solution aqueuse consiste en un mélange d'eau, d'aminoacide sous forme neutre ou de sel ou d'un mélange d'aminoacides indépendamment sous formes neutres ou de sels et éventuellement d'une base ou d'un mélange de bases, ou d'un acide ou d'un mélange d'acides. La base ou l'acide sert à adapter le pH de la solution aqueuse. L'aminoacide confère les propriétés améliorées de compatibilité avec les adhésifs. La base ou l'acide permettent de renforcer cet effet. L'ajout d'autres composés n'est pas nécessaire.

Dans le procédé selon l'invention, la solution aqueuse comprenant un aminoacide peut être appliquée à une température comprise entre 20 et 70°C. La durée d'application de la solution aqueuse peut être entre 0,5s et 40s, de préférence entre 2s et 20s.

La solution aqueuse comprenant un aminoacide peut être appliquée par immersion, aspersion ou tout autre système.

L'application de la solution aqueuse sur la surface extérieure 15 du revêtement métallique 7 peut être effectuée par tout moyen, par exemple par immersion, par pulvérisation (« spray » en anglais) ou par enduction au rouleau (« roll coat » en anglais). Cette dernière technique est préférée car elle permet de contrôler plus facilement la quantité de solution aqueuse appliquée tout en assurant une répartition homogène de la solution aqueuse sur la surface. Généralement, l'épaisseur de film humide constitué de la solution aqueuse appliquée sur la surface extérieure 15 du revêtement métallique 7 est de 0,2 à 5 µm, typiquement entre 1 et 3 µm.

Par « application sur la surface extérieure 15 du revêtement métallique 7 d'une solution aqueuse comprenant un aminoacide», on entend que la solution aqueuse comprenant un aminoacide est mise en contact avec la surface extérieure 15 du revêtement métallique 7. Il est donc sous-entendu que la surface extérieure 15 du revêtement métallique 7 n'est pas recouverte d'une couche intermédiaire (un film, un revêtement ou une solution) qui empêcherait la mise en contact de la solution aqueuse comprenant un aminoacide avec la surface extérieure 15 du revêtement métallique 7.

Typiquement, le procédé comprend, après l'étape d'application sur la surface extérieure 15 du revêtement métallique 7 d'une solution aqueuse comprenant un aminoacide, une étape de séchage, qui permet d'obtenir sur la surface extérieure 15 du revêtement métallique 7 une couche comprenant (ou constituée de) un aminoacide (sous forme neutre ou de sel) ou un mélange d'aminoacides (indépendamment sous formes neutres ou de sels). Celle-ci peut être effectuée en soumettant la tôle 1 à une température comprise entre 70 et 120°C, par exemple entre 80 et 100°C, généralement pendant 1 à 30 secondes, notamment 1 à 10 secondes, par exemple 2 s. En particulier, un procédé mis en œuvre avec une telle étape de pH permet d'obtenir une tôle qui conserve ses propriétés améliorées de compatibilité avec les adhésifs, même lorsqu'elle a subi subir un traitement de lavage/rehuilage.

Le revêtement métallique 7 de la tôle 1 obtenue est alors typiquement revêtu par une couche comprenant de 0,1 à 200 mg/m², notamment de 25 à 150 mg/m², en particulier de 50 à 100 mg/m², par exemple de 60 à 70 mg/m² d'aminoacide (sous forme neutre ou de sel) ou d'un mélange d'aminoacides (indépendamment sous formes neutres ou de sels). La quantité d'aminoacide déposé sur la surface extérieure 15 du revêtement métallique 7 peut être déterminée en dosant la quantité d'aminoacide déposé (par exemple par infrarouge), ou bien en dosant la quantité d'aminoacide restant dans la solution aqueuse (par exemple par dosage acidobasique et/ou par conductimétrie), étant donné que la concentration initiale en aminoacide de la solution aqueuse est connue. De plus, lorsque que l'aminoacide ou un des aminoacides est la cystéine, la quantité de cystéine déposée en surface peut être déterminée par spectrométrie de fluorescence X (SFX).

Généralement, la couche comprenant un aminoacide (sous forme neutre ou de sel) ou un mélange d'aminoacides (indépendamment sous formes neutres ou de sels) qui revêt le revêtement métallique 7 de la tôle 1 obtenue comprend de 50 à 100% en poids, notamment de 75 à 100% en poids, typiquement de 90 à 100% en poids d'aminoacide (sous forme neutre ou de sel) ou de mélange d'aminoacides (indépendamment sous formes neutres ou de sels).

Le procédé peut comprendre (ou être exempt) d'autre(s) étape(s) de traitement de surface que celui consistant à appliquer une solution aqueuse comprenant un aminoacide (par exemple un traitement de surface par oxydation alcaline et/ou un traitement de conversion chimique). Lorsque cette(s) étape(s) de traitement de surface conduit(sent) à la formation d'une couche sur le revêtement métallique 7, cette(ces) autre(s) étape(s) de traitement de surface est(sont) effectuée(s) simultanément ou après l'étape d'application d'une solution aqueuse comprenant un aminoacide sur la surface extérieure 15 du revêtement métallique 7, afin qu'il n'y ait pas de couche intermédiaire entre la surface extérieure 15 du revêtement métallique 7 et la solution aqueuse comprenant un aminoacide. Ces éventuelles étapes de traitement de surface susmentionnées peuvent comprendre d'autres sous-étapes de rinçage, de séchage....

Après avoir appliqué la solution aqueuse comprenant un aminoacide, un film de graisse ou d'huile est généralement appliqué sur la surface extérieure 15 du revêtement métallique 7 revêtue d'une couche comprenant un aminoacide ou d'un mélange d'aminoacides afin de le protéger contre la corrosion.

La bande peut éventuellement être bobinée avant d'être stockée. Typiquement, avant de mettre la pièce en forme, la bande est découpée. Un film de graisse ou d'huile peut alors être de nouveau appliqué sur la surface extérieure 15 du revêtement métallique 7 revêtue d'une couche comprenant un aminoacide ou d'un mélange d'aminoacides avant la mise en forme.

De préférence, le procédé est exempt d'étape de dégraissage (typiquement réalisée en appliquant une solution aqueuse basique de pH généralement supérieur à 9 sur la surface extérieure 15 du revêtement métallique 7) avant mise en forme et/ou avant application d'un adhésif. En effet, l'huile ou la graisse présents sur la surface extérieure 15 du revêtement métallique 7 sera généralement absorbée par l'adhésif qui sera appliqué ultérieurement et n'est donc pas gênante. De plus, le traitement par une solution aqueuse basique sur la surface extérieure 15 du revêtement métallique 7 revêtue d'une couche comprenant un aminoacide ou d'un mélange d'aminoacides pourrait conduire à l'élimination partielle ou totale de l'(des) aminoacide(s) qui a(ont) été déposé(s) sur la surface extérieure 15 du revêtement métallique 7, ce que l'on cherche à éviter.

La tôle peut ensuite être mise en forme par tout procédé adapté à la structure et à la forme des pièces à fabriquer, de préférence par emboutissage, tel que par exemple l'emboutissage à froid. La tôle 1 mise en forme correspond alors à une pièce, par exemple une pièce automobile.

Comme illustré schématiquement sur la figure 1, un adhésif 13 peut être appliqué localement sur au moins une surface extérieure 15 d'un revêtement métallique 7 sur laquelle a été appliqué au moins un des aminoacides susmentionné pour permettre notamment d'assembler la tôle 1 à une autre tôle et ainsi constituer une partie de véhicule automobile par exemple. L'adhésif 13 peut être tout type de colle ou de mastic utilisé de manière classique dans l'industrie automobile. Ces adhésifs peuvent être des adhésifs structuraux, structuraux renforcés (par exemple de type « crash ») ou semi-structuraux, des mastics d'étanchéité ou encore des mastics de calage qui sont de natures chimiques variées, telles que époxy, polyuréthane ou caoutchouc.

Une fois que la tôle 1 a été assemblée à une autre tôle par l'intermédiaire de l'adhésif 13, le procédé peut alors comprendre (ou être exempt d') :
- une étape de dégraissage, typiquement réalisée en appliquant une solution aqueuse basique sur la surface extérieure 15 du revêtement métallique 7, et/ou
- d'autre(s) étape(s) de traitement de surface, par exemple une étape de phosphatation, et/ou
- une étape de cataphorèse.

L'invention concerne également la tôle 1 susceptible d'être obtenue par le procédé. Un telle tôle comprend au moins une partie d'au moins une surface extérieure 15 du revêtement métallique 7 revêtue par une couche comprenant de 0,1 à 200 mg/m², notamment de 25 à 150 mg/m², en particulier de 50 à 100 mg/m², par exemple de 60 à 70 mg/m² d'aminoacide sous forme neutre ou de sel.

De préférence, un adhésif 13 est présent localement sur au moins une surface extérieure 15 d'un revêtement métallique 7 revêtue d'une couche comprenant un aminoacide ou d'un mélange d'aminoacides de la tôle 1.

L'invention concerne également un assemblage comprenant :
- une première tôle 1 telle que définie ci-dessus, et
- une deuxième tôle,
la première tôle 1 et la deuxième tôle étant assemblées par l'intermédiaire de l'adhésif 13 présent localement sur au moins une surface extérieure 15 du revêtement métallique 7 revêtue d'une couche comprenant un aminoacide ou d'un mélange d'aminoacides de la première tôle 1.

L'invention concerne également l'utilisation d'une solution aqueuse comprenant un aminoacide choisi parmi l'alanine, l'arginine, l'acide aspartique, l'acide glutamique, la cystéine, la glycine, la lysine, la méthionine, la proline, la thréonine, la valine, et un mélange de ceux-ci, chaque aminoacide étant sous forme neutre ou de sel, la solution aqueuse étant exempte de composé comprenant un métal du groupe IIIB ou du groupe IVB, pour améliorer la compatibilité entre un adhésif 13 et au moins une partie d'une surface extérieure 15 d'un revêtement métallique 7 revêtant au moins une face 5 d'un substrat 3 en acier, où le revêtement métallique 7 comprend au moins 40% en poids de zinc.

Les modes de réalisation préférentiels décrits ci-dessus pour la solution aqueuse, les conditions d'application de la solution aqueuse, le revêtement métallique 7 sont bien sûr applicables.

L'invention concerne également un procédé pour améliorer la compatibilité, avec un adhésif 13, d'au moins une partie d'une surface extérieure 15 d'un revêtement métallique 7 revêtant au moins une face 5 d'un substrat 3 en acier, comprenant au moins les étapes de :
- fourniture d'un substrat 3 en acier présentant deux faces 5, dont au moins l'une est revêtue par un revêtement métallique 7 comprenant au moins 40% en poids de zinc,
- application sur la surface extérieure 15 du revêtement métallique 7 d'une solution aqueuse comprenant un aminoacide choisi parmi l'alanine, l'arginine, l'acide aspartique, l'acide glutamique, la cystéine, la glycine, la lysine, la méthionine, la proline, la thréonine, la valine, et un mélange de ceux-ci, chaque aminoacide étant sous forme neutre ou de sel, la solution aqueuse étant exempte de composé comprenant un métal du groupe IIIB ou du groupe IVB.

Les modes de réalisation préférentiels décrits ci-dessus pour la solution aqueuse, les conditions d'application de la solution aqueuse, le revêtement métallique 7 et les éventuelles étapes supplémentaires dans le procédé sont bien sûr applicables.

Ci-après est également décrit l'utilisation d'une solution aqueuse comprenant un aminoacide choisi parmi la proline, la thréonine et un mélange de celles-ci, la proline et la thréonine étant indépendamment sous forme neutre ou de sel, la solution aqueuse étant exempte de composé comprenant un métal du groupe IIIB ou du groupe IVB, pour :
- améliorer la compatibilité, avec un adhésif 13, d'au moins une partie d'une surface extérieure 15 d'un revêtement métallique 7 revêtant au moins une face 5 d'un substrat 3 en acier,
- améliorer la résistance à la corrosion de la surface extérieure 15 du revêtement métallique 7 revêtant au moins une face 5 du substrat 3 en acier, et
- améliorer les propriétés tribologiques de la surface extérieure 15 du revêtement métallique 7 revêtant au moins une face 5 du substrat 3 en acier,
où le revêtement métallique 7 comprend au moins 40% en poids de zinc.

Les modes de réalisation préférentiels décrits ci-dessus pour la solution aqueuse, les conditions d'application de la solution aqueuse et le revêtement métallique 7 sont bien sûr applicables.

Ci-après est également décrit un procédé pour :
- améliorer la compatibilité, avec un adhésif 13, d'au moins une partie d'une surface extérieure 15 d'un revêtement métallique 7 revêtant au moins une face 5 d'un substrat 3 en acier,
- améliorer la résistance à la corrosion de la surface extérieure 15 du revêtement métallique 7 revêtant au moins une face 5 du substrat 3 en acier, et
- améliorer les propriétés tribologiques de la surface extérieure 15 du revêtement métallique 7 revêtant au moins une face 5 du substrat 3 en acier,
ledit procédé comprenant au moins les étapes de :
- fourniture d'un substrat 3 en acier présentant deux faces 5, dont au moins l'une est revêtue par un revêtement métallique 7 comprenant au moins 40% en poids de zinc,
- application sur la surface extérieure 15 du revêtement métallique 7 d'une solution aqueuse comprenant un aminoacide choisi parmi la proline, la thréonine et un mélange de celles-ci, la proline et la thréonine étant indépendamment sous forme neutre ou de sel, la solution aqueuse étant exempte de composé comprenant un métal du groupe IIIB ou du groupe IVB.

Les modes de réalisation préférentiels décrits ci-dessus pour la solution aqueuse, les conditions d'application de la solution aqueuse, le revêtement métallique 7 et les éventuelles étapes supplémentaires dans le procédé sont bien sûr applicables.

### Exemple 1 : Tests de traction

Afin d'illustrer l'invention, des tests de traction ont été réalisés et sont décrits à titre d'exemples non limitatifs.

Des échantillons de tôles 1 en acier recouvertes d'un revêtement métallique 7 comprenant environ 99% de zinc (tôle en acier GI), ou bien des échantillons de tôles 1 en acier électrozinguées comprenant 100% de zinc (tôle en acier EG) ont été utilisées.

Comme illustré par la figure 2, chaque éprouvette 27 a été préparée de la façon suivante. On a découpé des languettes 29 dans la tôle 1 à évaluer. Ces languettes 29 avaient des dimensions de 25 mm × 12,5 mm × 0,2 mm.

Les languettes 29 ont été immergées pour une durée d'immersion de 20 s à une température de 50°C dans une solution aqueuse d'aminoacide dont le pH avait été ajusté par ajout de H₃PO₄, à l'exception des tôles de référence (Ref) n'ayant été soumises à aucun traitement par un aminoacide.

De l'huile Fuchs® 3802-39S a été appliquée sur les languettes 29 en une quantité de 3 g/m².

On a collé deux languettes 29 par un joint 31 d'adhésif BM1496V, BM1440G ou BM1044, qui sont des colles dites « crash » à base d'époxy et commercialisées par la société Dow® Automotive. Ces adhésifs ont été sélectionnés car il s'agit d'adhésifs conduisant classiquement à des ruptures adhésives avant vieillissement et/ou après vieillissement de l'adhésif.

L'éprouvette 27 ainsi constituée a ensuite été portée à 180°C et maintenue à cette température pendant 30 minutes, ce qui permet de cuire la colle.

Des tests de vieillissement ont été effectués avec les éprouvettes 27 dont les languettes 29 ont été collées avec de la colle BM1044. Le vieillissement naturel de l'adhésif est simulé par un vieillissement en cataplasme humide à 70°C pendant 7 ou 14 jours.

L'essai de traction a ensuite été réalisé à une température ambiante de 23°C en imposant une vitesse de traction de 10 mm/min à une languette 29, parallèlement à celle-ci, tandis que l'autre languette 29 de l'éprouvette 27 a été fixée. L'essai a été poursuivi jusqu'à la rupture de l'éprouvette 27.

A l'issue de l'essai, on a noté la contrainte maximale de traction et on a évalué visuellement la nature de la rupture.

Dans le tableau 1 sont regroupés les résultats sur tôle GI.

Dans le tableau 2 sont regroupés les résultats sur tôle électrozinguées (EG).

RCS signifie rupture cohésive superficielle.

Comme illustré par les tableaux 1 et 2 ci-dessous, les tôles 1 qui ont subi un traitement avec une solution aqueuse comprenant un aminoacide tel que défini ci-dessus favorisent l'apparition de ruptures cohésives superficielles, contrairement aux tôles de référence pour lesquelles plus de ruptures adhésives ont été constatées.

En particulier, sur les tôles GI (tableau 1):
- avec l'adhésif BM1496V, les faciès de rupture observés sur les essais 1 à 5B selon l'invention sont uniquement constitués de rupture cohésive superficielle, contrairement à la référence n'ayant pas subi de traitement (Ref 1) où il est constaté 30% de rupture adhésive. A titre de contre-exemple, les tôles 1 qui ont subi un traitement avec une solution aqueuse comprenant de la serine ou de la glutamine (essais CE1 et CE2) présentent un faciès de rupture dégradé par rapport à la référence Ref 1 elle-même, la rupture étant très majoritairement adhésive.
- Avec l'adhésif BM1440G, les faciès de rupture observés sur les essais selon l'invention sont également uniquement constitués de rupture cohésive superficielle, contrairement à la référence n'ayant pas subi de traitement (Ref 2) où il est constaté 20% de rupture adhésive,
- Avec l'adhésif BM1044, il est observé que l'adhérence de l'adhésif sur les tôles selon l'invention (essais 7A à 7C) vieillit mieux que sur la référence, après 7 et 14 jours de cataplasme humide.

En particulier, sur les tôles électrozinguées (tableau 2) :
- avec l'adhésif BM1496V, les faciès de rupture observés sur les essais 8A à 9B selon l'invention sont majoritairement constitués de rupture cohésive superficielle, contrairement à la référence n'ayant pas subi de traitement (Ref 6) où il est constaté 40% de rupture adhésive,
- Avec l'adhésif BM1044, il est observé que l'adhérence de l'adhésif sur les tôles selon l'invention (essais 10A-10B) vieillit mieux que sur la référence (Ref 7-Ref 8), après 7 jours de cataplasme humide. A titre de contre-exemple, les tôles 1 qui ont subi un traitement avec une solution aqueuse comprenant de la serine ou de la glutamine (essais CE3 à CE5) présentent un faciès de rupture dégradé par rapport à la référence elle-même, la rupture étant majoritairement adhésive.

Les autres propriétés des tôles 1 obtenues par le procédé selon l'invention (propriétés mécaniques, compatibilité avec une(des) étape(s) ultérieure(s) de cataphorèse et/ou phosphatation et/ou mise en peinture) n'ont pas été dégradées.

**Tableau 1 : Contraintes maximales de traction et natures de la rupture pour les éprouvettes à base de tôles GI testées.**

| **N° Essai** | **Adhésif** | **Acide Aminé** | **Concentration** g/L | **pH** | **Vieillissement** (jours) | **Contrainte Maxi** MPa | **Faciès de rupture** (RCS) |
|---|---|---|---|---|---|---|---|
| 1 | | Acide Glutamique | 0,01 | Naturel | NA | 18,0 | 80% |
| 2A | | L-Proline | 20 | 4 | NA | 17,8 | 100% |
| 2B | | | 50 | | | 16,8 | 100% |
| 2C | | | 100 | | | 15,1 | 100% |
| 2D | | | 150 | | | 14,4 | 100% |
| 3A | | L-Alanine | 20 | 4 | NA | 17,2 | 100% |
| 3B | | | 50 | | | 15,7 | 100% |
| 3C | | | 100 | | | 15,3 | 100% |
| 3D | BM1496V | | 150 | | | 13,1 | 100% |
| 4A | | L-Thréonine | 20 | 4 | NA | 16,8 | 100% |
| 4B | | | 50 | | | 15,9 | 100% |
| 4C | | | 80 | | | 15 | 100% |
| 4D | | | 100 | | | 14,8 | 100% |
| 5A | | L-Valine | 20 | 4 | NA | 17 | 100% |
| 5B | | | 50 | | | 17,1 | 100% |
| Ref 1 | | NA | NA | NA | NA | 17,9 | 70% |
| CE1 | | L-Glutamine | 20 | Naturel | NA | 17,6 | 5% |
| CE2 | | L-Serine | 20 | Naturel | NA | 15,4 | 0% |
| 6 | BM1440G | L-Proline | 50 | naturel | NA | 14,5 | 100% |
| Ref 2 | | NA | NA | NA | NA | 14,9 | 80% |
| 7A | BM1044 | L-Proline | 50 | naturel | NA | 10,6 | 100% |
| 7B | | | | | 7 | 11,5 | 100% |
| 7C | | | | | 14 | 11,3 | 90% |
| Ref 3 | | NA | NA | NA | NA | 11,8 | 100% |
| Ref 4 | | | | | 7 | 12 | 80% |
| Ref 5 | | | | | 14 | 11,5 | 60% |

**Tableau 2 : Contraintes maximales de traction et natures de la rupture pour les éprouvettes à base de tôles électrozinguées testées.**

| **N° Essai** | **Adhésif** | **Acide Aminé** | **Concentration** (g/L) | **pH** | **Vieillissement** (jours) | **Contrainte Maxi** (Mpa) | **Faciès de rupture** (RCS) |
|---|---|---|---|---|---|---|---|
| 8A | BM1496V | L-Cystéine | 20 | naturel | NA | 14,2 | 80% |
| 8B | | | 50 | | | 12,9 | 95% |
| 9A | | L-Proline | 20 | naturel | NA | 12,2 | 95% |
| 9B | | | 50 | | | 10 | 100% |
| Ref 6 | | NA | NA | NA | NA | 14,6 | 60% |
| 10A | BM1044 | L-Cysteine | 30 | naturel | NA 7 | 14,2 | 100% |
| 10B | | | | | | 12 | 100% |
| Ref 7 | | NA | NA | NA | NA 7 | 16,2 | 100% |
| Ref 8 | | | | | | 13,5 | 80% |
| CE3 | | L-Glutamine | 20 | naturel | 7 | 13,1 | 50% |
| CE4 | | L-Sérine | 20 50 | naturel | 7 | 9 | 40% |
| CE5 | | | | | | 5,8 | 10% |

### Exemple 2 : Test de mesure du coefficient de frottement (µ) en fonction de la pression de contact (MPa) et tests de résistance à la corrosion pour les aminoacides proline et thréonine

### 2.1. Tests de résistance à la corrosion

Afin d'illustrer l'invention, des tests de résistance à la corrosion ont été réalisés selon les normes ISO 6270-2 de 2005 et/ou VDA 230-213 de 2008 sur des tôles 1 en acier recouvertes d'un revêtement métallique 7 comprenant environ 99% de zinc (tôle en acier GI), ou bien des échantillons de tôles 1 en acier électrozinguées comprenant 100% de zinc (tôle en acier EG), sur lesquelles a été appliqué :
- une solution aqueuse de proline ou de thréonine dont le pH avait été éventuellement ajusté par ajout de H₃PO₄, puis
- de l'huile Fuchs® 3802-39S en une quantité de 3 g/m²,
- et ayant alors été embouties.
Il apparaît que les tôles 1 obtenues par un procédé comprenant l'application d'une solution de proline ou de thréonine présentent une meilleure résistance à la corrosion. 2.2. Test de mesure du coefficient de frottement (µ) en fonction de la pression de contact (MPa)

Des tests de mesure du coefficient de frottement (µ) en fonction de la pression de contact (MPa) ont été réalisés et sont décrits à titre d'exemples non limitatifs.

Des échantillons de tôles 1 en acier recouvertes d'un revêtement métallique 7 comprenant environ 99% de zinc (tôle en acier GI qualité DX56D, épaisseur 0,7 mm), des échantillons de tôles 1 en acier électrozinguées dont le revêtement comprenait 100% de zinc (tôle en acier EG qualité DC06, épaisseur 0,8 mm), des échantillons de tôles 1 en acier Fortiform® électrozinguées dont le revêtement comprenait 100% de zinc (7,5 µm sur les deux faces) ou bien des échantillons de tôles 1 en acier revêtues par dépôt par jet de vapeur sonique (Zn JVD) dont le revêtement comprenait 100% de zinc (7,5 µm sur les deux faces) ont été utilisés.

On a découpé dans ces tôles en acier des échantillons ayant des dimensions de 450 mm ×35 mm × épaisseur (0,7 mm pour GI et 0,8 mm pour EG). Les échantillons ont été immergés pour une durée d'immersion de 20 s à une température de 50°C dans une solution aqueuse de proline ou de thréonine dont le pH avait été éventuellement ajusté par ajout de H₃PO₄. De l'huile Fuchs® 3802-39S (en une quantité de 3 g/m²), Fuchs® 4107S (à refus) ou QUAKER 6130 (à refus) a été appliquée sur une face des échantillons.

On a alors mesuré le coefficient de frottement (µ) en fonction de la pression de contact (MPa) en faisant varier la pression de contact de 0 à 80 MPa :
- sur l'échantillon de la tôle traité par la solution aqueuse de proline ou de thréonine ainsi préparé, et
- sur un échantillon de tôle revêtue non traitée par un aminoacide (témoin).

Plusieurs phases de tests ont été effectuées (phases A, B, et C dans le tableau 3 ci-dessous).

Comme illustré par le tableau 3 ci-dessous, on a observé que l'application d'une solution aqueuse de proline ou de thréonine permet :
- de réduire le coefficient de frottement par rapport à une tôle revêtue non traitée par une telle solution (témoin), et/ou
- d'éviter un frottement pas à-coups ou broutage (« stick slip » en anglais), alors qu'à certaines pressions, un broutage est observé pour une tôle revêtue non traitée par une telle solution (témoin),
- de conserver un faible coefficient de frottement après traitement thermique de dégazage.

**Tableau 3 : Propriétés tribologiques (Observation d'un broutage et coefficient de friction (µ) en fonction de la pression exercée) pour les échantillons de tôles testés.**

| Tôle | Huile | | Solution aqueuse appliquée | | | Pression (MPa) à laquelle un broutage est observé | Coefficient de friction (µ) | | |
|---|---|---|---|---|---|---|---|---|---|
| | | | Aminoacide (nature) | Concentration en aminoacide (g/L) | pH de la solution aqueuse | | à 40 MPa | à 60 MPa | à 80 MPa |
| GI | Fuchs 3802-39S | A | Aucun(témoin) | NA | NA | 21 | 0,180 | 0,190 | 0,200 |
| | | | Proline | 50 | 6,3 | NA | 0,145 | 0,160 | 0,150 |
| | | | | 100 | 6,3 | NA | 0,120 | 0,120 | 0,105 |
| | | | | 150 | 6,3 | NA | 0,110 | 0,105 | 0,105 |
| | | | Thréonine | 20 | 5,6 | NA | 0,130 | 0,155 | 0,140 |
| | | | | 50 | 5,6 | NA | 0,110 | 0,110 | 0,100 |
| | | | | 80 | 5,6 | NA | 0,110 | 0,100 | 0,090 |
| | | | | 100 | 5,6 | NA | 0,115 | 0,110 | 0,100 |
| GI | | _{C} | Aucun(témoin) | NA | NA | 18 | 0,18 | 0,19 | 0,17 |
| | | | Proline | 80 | 4,0* | NA | 0,13 | 0,13 | 0,12 |
| | | | Proline** | 80 | 4,0* | NA | 0,14 | 0,14 | 0,13 |
| EG DC06 | | | Aucun(témoin) | NA | NA | 43 | 0,170 | 0,200 | 0,190 |
| | | | Proline | 50 | Naturel | NA | 0,120 | 0,120 | 0,120 |
| | | | Thréonine | 20 | naturel | NA | 0,125 | 0,125 | 0,110 |
| EG DC06 | Quaker | | Aucun(témoin) | NA | NA | 18 | 0,19 | 0,16 | 0,14 |
| | | | Proline | 70 | naturel | NA | 0,15 | 0,12 | 0,11 |
| | | | Proline*** | 70 | naturel | NA | 0,15 | 0,12 | 0,11 |
| Fortiform | | | Aucun(témoin) | NA | NA | NA | 0,18 | 0,15 | 0,13 |
| | | | Proline | 70 | naturel | NA | 0,13 | 0,12 | 0,11 |
| Zn JVD | Fuchs® 4107S | A | Aucun(témoin) | NA | NA | NA | 0,25 | 0,22 | 0,18 |
| | | | Proline | 10 | naturel | NA | 0,24 | 0,20 | 0,17 |
| | | | Proline | 20 | naturel | NA | 0,20 | 0,17 | 0,14 |
| | | B | Aucun(témoin) | NA | NA | NA | 0,27 | 0,23 | 0,20 |
| | | | Proline | 10 | naturel | NA | 0,24 | 0,20 | 0,17 |
| | | | Proline | 20 | naturel | NA | 0,20 | 0,17 | 0,14 |
| | | | Proline | 70 | naturel | NA | 0,14 | 0,12 | 0,10 |
| | Quaker | A | Aucun(témoin) | NA | NA | NA | 0,26 | 0,23 | 0,20 |
| | | | Proline | 10 | naturel | NA | 0,25 | 0,20 | 0,18 |
| | | | Proline | 20 | naturel | NA | 0,20 | 0,17 | 0,15 |
| | | B | Aucun(témoin) | NA | NA | NA | 0,26 | 0,23 | 0,20 |
| | | | Proline | 10 | naturel | NA | 0,25 | 0,20 | 0,18 |
| | | | Proline | 20 | naturel | NA | 0,20 | 0,17 | 0,15 |
| | | | Proline | 70 | naturel | NA | 0,14 | 0,12 | 0,10 |

| | | | | | | | | | |
|---|---|---|---|---|---|---|---|---|---|
| EG : substrat électrozingué * : pH ajusté par ajout de H₃PO₄ ** : test après avoir subi un traitement de lavage/rehuilage *** : test après avoir subi un traitement thermique de dégazage (traitement thermique de 24 heures à 210°C en étuve). | | | | | | | | | |

## Revendications

1. Procédé de préparation d'une tôle (1) comprenant au moins les étapes de :
- fourniture d'un substrat (3) en acier dont au moins une face (5) est revêtue par un revêtement métallique (7) comprenant au moins 40% en poids de zinc,
- application sur la surface extérieure (15) du revêtement métallique (7) d'une solution aqueuse comprenant un aminoacide choisi parmi l'alanine, l'arginine, l'acide aspartique, la cystéine, la lysine, la méthionine, la proline, la thréonine, la valine, et un mélange de ceux-ci, chaque aminoacide étant sous forme neutre ou de sel,
la solution aqueuse étant exempte de composé comprenant un métal du groupe IIIB ou du groupe IVB, et
le pourcentage massique en extrait sec de l'aminoacide sous forme neutre ou de sel ou du mélange d'aminoacides sous forme neutres ou de sels dans la solution aqueuse étant supérieur ou égal à 50%, de préférence supérieur ou égal à 75%..

2. Procédé selon la revendication 1, comprenant une étape préalable de préparation du substrat (3) en acier dont au moins une face (5) est revêtue par un revêtement métallique (7), choisie parmi une galvanisation à chaud et un électrozinguage du substrat (3) en acier.

3. Procédé selon l'une quelconque des revendications 1 à 2, dans lequel le revêtement métallique (7) est à choisir parmi un revêtement de zinc GI, un revêtement de zinc GA, un alliage de zinc et d'aluminium, un alliage de zinc et de magnésium et un alliage de zinc, de magnésium et d'aluminium, de préférence le revêtement métallique (7) comprend entre 0,1 et 10% en poids de Mg et éventuellement entre 0,1 et 20% en poids d'Al, le reste du revêtement métallique étant du Zn, les impuretés inévitables et éventuellement un ou plusieurs éléments additionnels choisis parmi Si, Sb, Pb, Ti, Ca, Mn, Sn, La, Ce, Cr, Ni ou Bi.

4. Procédé selon l'une des revendications précédentes, dans lequel l'aminoacide est choisi parmi l'alanine, l'acide aspartique, la cystéine, la méthionine, la proline, la thréonine, la valine et un mélange de ceux-ci, chaque aminoacide étant sous forme neutre ou de sel, de préférence l'aminoacide est choisi parmi la proline sous forme neutre ou de sel, la cystéine sous forme neutre ou de sel, et un mélange de celles-ci, de préférence la proline sous forme neutre ou de sel.

5. Procédé selon l'une quelconque des revendications 1 à 4, dans lequel le substrat (3) en acier dont au moins une face (5) est revêtue par un revêtement métallique (7) a été préparé par galvanisation à chaud et l'aminoacide est choisi parmi l'alanine, la proline, la thréonine et la valine, et un mélange de ceux-ci, chaque aminoacide étant sous forme neutre ou de sel.

6. Procédé selon l'une des revendications précédentes, dans lequel la solution aqueuse comprend de 1 à 200 g/L d'aminoacide sous forme neutre ou de sel ou d'un mélange d'aminoacides sous forme neutres ou de sels ou de 10 à 1750 mmol/L d'aminoacide sous forme neutre ou de sel ou d'un mélange d'aminoacides sous forme neutres ou de sels.

7. Procédé selon l'une des revendications précédentes, dans lequel la solution aqueuse a un pH compris entre un pH égal au [point isoélectrique de l'aminoacide - 3] et un pH égal au [point isoélectrique de l'aminoacide + 1], de préférence compris entre un pH égal au [point isoélectrique de l'aminoacide - 3] et un pH égal au [point isoélectrique de l'aminoacide - 1].

8. Procédé selon l'une des revendications précédentes, dans lequel la solution aqueuse est appliquée à une température comprise entre 20 et 70°C et/ou dans lequel la solution est appliquée pendant une durée comprise entre 0,5s et 40s sur la surface extérieure (15) du revêtement métallique (7).

9. Procédé selon l'une des revendications précédentes, dans lequel la solution est appliquée par enduction au rouleau.

10. Procédé selon l'une des revendications précédentes, comprenant, après l'étape d'application sur la surface extérieure (15) du revêtement métallique (7) d'une solution aqueuse comprenant un aminoacide, une étape de séchage, de préférence effectuée en soumettant la tôle (1) à une température comprise entre 70 et 120°C pendant 1 à 30 secondes.

11. Procédé selon l'une des revendications précédentes, comprenant, après l'étape d'application sur la surface extérieure (15) du revêtement métallique (7) d'une solution aqueuse comprenant un aminoacide et l'éventuelle étape de séchage, une étape d'application d'un film de graisse ou d'huile sur la surface extérieure (15) du revêtement (7) revêtue d'une couche comprenant un aminoacide ou d'un mélange d'aminoacides.

12. Procédé selon l'une des revendications précédentes, comprenant, après l'étape d'application sur la surface extérieure (15) du revêtement métallique (7) d'une solution aqueuse comprenant un aminoacide, l'éventuelle étape de séchage et l'éventuelle étape d'application d'un film de graisse ou d'huile, une étape de mise en forme de la tôle (1), de préférence par emboutissage.

13. Procédé selon l'une des revendications précédentes, comprenant, après l'étape d'application sur la surface extérieure (15) du revêtement métallique (7) d'une solution aqueuse comprenant un aminoacide, l'éventuelle étape de séchage, l'éventuelle étape d'application d'un film de graisse ou d'huile, l'éventuelle étape de mise en forme de la tôle (1), une étape d'application d'un adhésif (13) localement sur au moins une surface extérieure (15) d'un revêtement métallique (7) revêtue d'une couche comprenant un aminoacide ou d'un mélange d'aminoacides .

14. Tôle (1) susceptible d'être obtenue par un procédé selon l'une quelconque des revendications 1 à 11.

15. Tôle (1) selon la revendication précédente, dont au moins une partie d'au moins une surface extérieure (15) du revêtement métallique (7) est revêtue par une couche comprenant de 0,1 à 200 mg/m² d'aminoacide sous forme neutre ou de sel ou d'un mélange d'aminoacides sous forme neutres ou de sels.

16. Tôle (1) selon la revendication 14 ou 15, dont au moins une partie d'au moins une surface extérieure (15) du revêtement métallique (7) est revêtue par une couche comprenant de 50 à 100% en poids d'aminoacide sous forme neutre ou de sel, ou de mélange d'aminoacides sous formes neutres ou de sels.

17. Tôle (1) selon l'une quelconque des revendications 14 à 16 susceptible d'être obtenue par le procédé selon la revendication 13, comprenant un adhésif (13) présent localement sur au moins une surface extérieure (15) du revêtement métallique (7) revêtue d'une couche comprenant un aminoacide ou d'un mélange d'aminoacides.

18. Assemblage comprenant :
- une première tôle (1) selon la revendication 17, et
- une deuxième tôle,
la première tôle (1) et la deuxième tôle étant assemblées par l'intermédiaire de l'adhésif (13) présent localement sur au moins une surface extérieure (15) du revêtement métallique (7) de la première tôle (1).

19. Utilisation d'une solution aqueuse comprenant un aminoacide choisi parmi l'alanine, l'arginine, l'acide aspartique, l'acide glutamique, la cystéine, la glycine, la lysine, la méthionine, la proline, la thréonine, la valine, et un mélange de ceux-ci, chaque aminoacide étant sous forme neutre ou de sel, la solution aqueuse étant exempte de composé comprenant un métal du groupe IIIB ou du groupe IVB, pour améliorer la compatibilité, avec un adhésif (13), d'au moins une partie d'une surface extérieure (15) d'un revêtement métallique (7) revêtant au moins une face (5) d'un substrat (3) en acier, où le revêtement métallique (7) comprend au moins 40% en poids de zinc.

## Patentansprüche

1. Verfahren zur Herstellung eines Blechs (1), das mindestens die Schritte umfasst:
- Liefern eines Substrats (3) aus Stahl, dessen mindestens eine Fläche (5) von einer Metallbeschichtung (7) bedeckt ist, die mindestens 40 Gew.-% Zink umfasst,
- Aufbringen einer wässrigen Lösung, die eine Aminosäure umfasst, ausgewählt aus Alanin, Arginin, Asparaginsäure, Cystein, Lysin, Methionin, Prolin, Threonin, Valin und Mischungen derselben auf die Außenfläche (15) der Metallbeschichtung (7), wobei jede Aminosäure in neutraler Form oder in Form von Salz vorhanden ist, die wässrige Lösung frei von einer Zusammensetzung ist, die einen Metall der Gruppe IIIB oder der Gruppe IVB ist und
- der Massenanteil an Trockenextrakt der Aminosäure in neutraler Form oder in Form von Salz oder der Mischung von Aminosäuren in neutraler Form oder in Form von Salzen in der wässrigen Lösung größer als oder gleich 50 % ist, vorzugsweise größer als oder gleich 75%.

2. Verfahren nach Anspruch 1, einen vorhergehenden Schritt des Herstellens des Substrats (3) aus Stahl umfassend, dessen mindestens eine Fläche (5) von einer Metallbeschichtung (7) bedeckt wird, ausgewählt aus einer Feuerverzinkung oder Elektroverzinkung des Substrats (3) aus Stahl.

3. Verfahren nach einem beliebigen der Ansprüche 1 bis 2, bei der die Metallbeschichtung (7) ausgewählt ist aus einer Zinkbeschichtung GI, einer Zinkbeschichtung GA,einer Legierung aus Zink und Aluminium, einer Legierung aus Zink und Magnesium und einer Legierung aus Zink, Magnesium und Aluminium, vorzugsweise die Metallbeschichtung (7) zwischen 0,1 und 10 Gew.-% Mg und gegebenenfalls zwischen 0,1 und 20 Gew.-% AI umfasst, wobei der Rest der Metallbeschichtung Zn, unvermeidbare Verunreinigungen und gegebenenfalls ein oder mehrere zusätzliche Elemente, ausgewählt aus Si, Sb, Pb, Ti, Ca, Mn, Sn, La, Ce, Cr, Ni oder Bi ist.

4. Verfahren nach einem der vorhergehenden Ansprüche, bei dem die Aminosäure ausgewählt ist aus Alanin, Asparaginsäure, Cystein, Methionin, Prolin, Threonin, Valin und Mischungen derselben, wobei jede Aminosäure in neutraler Form oder in Form von Salz vorhanden ist, vorzugsweise die Aminosäure ausgewählt ist aus Prolin in neutraler Form oder in Form von Salz, Cystein in neutraler Form oder in Form von Salz und einer Mischung derselben, vorzugsweise Prolin in neutraler Form oder in Form von Salz.

5. Verfahren nach einem beliebigen der Ansprüche 1 bis 4, bei dem das Substrat (3) aus Stahl, dessen mindestens eine Fläche (5) von einer Metallbeschichtung (7) bedeckt ist, durch Feuerverzinkung hergestellt wird und die Aminosäure ausgewählt ist aus Alanin, Prolin, Threonin und Valin und Mischungen derselben, wobei jede Aminosäure in neutraler Form oder in Form von Salz vorhanden ist.

6. Verfahren nach einem der vorhergehenden Ansprüche, bei dem die wässrige Lösung von 1 bis 200 g/L Aminosäure in neutraler Form oder in Form von Salz oder eine von Aminosäuren in neutraler Form oder in Form von Salzen oder von 10 bis 1750 mmol/L Aminosäure in neutraler Form oder in Form von Salz oder eine Mischung von Aminosäuren in neutraler Form oder in Form von Salzen umfasst.

7. Verfahren nach einem der vorhergehenden Ansprüche, bei dem die wässrige Lösung einen pH Wert aufweist, der zwischen einem pH Wert gleich dem [isoelektrischen Punkt der Aminosäure - 3] und einem pH-Wert gleich dem [isoelektrischen Punkt der Aminosäure + 1] liegt, vorzugsweise zwischen einem pH Wert gleich dem [isoelektrischen Punkt der Aminosäure - 3] und einem pH Wert gleich dem [isoelektrischen Punkt der Aminosäure - 1] liegt.

8. Verfahren nach einem der vorhergehenden Ansprüche, bei dem die wässrige Lösung bei einer Temperatur zwischen 20 und 70°C angewandt wird und/oder bei dem die Lösung während einer Dauer zwischen 0,5 s und 40 s auf die Außenfläche (15) der Metallbeschichtung (7) aufgebracht wird.

9. Verfahren nach einem der vorhergehenden Ansprüche, bei dem die Lösung durch Walzenbeschichten aufgebracht wird.

10. Verfahren nach einem der vorhergehenden Ansprüche, das nach dem Schritt des Aufbringens einer eine Aminosäure enthaltenden wässrigen Lösung auf die Außenfläche (15) der Metallbeschichtung (7) einen Trocknungsschritt umfasst, der vorzugsweise dadurch ausgeführt wird, dass das Blech (1) einer Temperatur zwischen 70 und 120°C während 1 bis 30 Sekunden unterworfen wird.

11. Verfahren nach einem der vorhergehenden Ansprüche, das nach dem Schritt des Aufbringens einer eine Aminosäure enthaltenden wässrigen Lösung auf die Außenfläche (15) der Metallbeschichtung (7) und gegebenenfalls dem Trocknungsschritt einen Schritt des Aufbringens einer Fett-oder Ölschicht auf die Außenfläche (15) der Beschichtung (7) umfasst, die mit einer eine Aminosäure oder eine Mischung von Aminosäuren umfassende Schicht bedeckt ist.

12. Verfahren nach einem der vorhergehenden Ansprüche, das nach dem Schritt des Aufbringens einer eine Aminosäure enthaltenden wässrigen Lösung auf die Außenfläche (15) der Metallbeschichtung (7) und gegebenenfalls dem Trocknungsschritt und gegebenenfalls dem Schritt des Aufbringens einer Fett-oder Ölschicht einen Schritt einer Formgebung des Blechs (1), vorzugsweise durch Pressen umfasst.

13. Verfahren nach einem der vorhergehenden Ansprüche, das nach dem Schritt des Aufbringens einer eine Aminosäure enthaltenden wässrigen Lösung auf die Außenfläche (15) der Metallbeschichtung (7), gegebenenfalls dem Trocknungsschritt, gegebenenfalls dem Schritt des Aufbringens einer Fett-oder Ölschicht, gegebenenfalls dem Schritt einer Formgebung des Blechs (1) einen Schritt des Aufbringens eines Klebstoffs (13) lokal auf mindestens eine Außenfläche (15) einer Metallbeschichtung (7), die mit einer eine Aminosäure oder eine Mischung aus Aminosäuren enthaltenden Schicht bedeckt ist, umfasst.

14. Blech (1) das geeignet ist, durch ein Verfahren nach einem beliebigen der Ansprüche 1 bis 11 hergestellt zu werden.

15. Blech (1) nach dem vorhergehenden Anspruch, von dem mindestens ein Teil mindestens einer Außenfläche (15) der Metallbeschichtung (7) von einer Schicht bedeckt ist, die 0,1 bis 200 mg/m² Aminosäure in neutraler Form oder in Form von Salz oder eine Mischung von Aminosäuren in neutraler Form oder in Form von Salzen umfasst.

16. Blech (1) nach Anspruch 14 oder 15, von dem mindestens ein Teil mindestens einer Außenfläche (15) der Metallbeschichtung (7) von einer Schicht bedeckt ist, die 50 bis 100 Gew.-% Aminosäure in neutraler Form oder in Form von Salz oder eine Mischung von Aminosäuren in neutraler Form oder in Form von Salzen umfasst.

17. Blech (1) nach einem beliebigen der Ansprüche 14 bis 16, das geeignet ist, durch das Verfahren nach Anspruch 13 erhalten zu werden, das einen Klebstoff (13), der lokal auf mindestens einer Außenfläche (15) der Metallbeschichtung (7) vorhanden ist, umfasst, die mit einer eine Aminosäure oder eine Mischung aus Aminosäuren enthaltenden Schicht beschichtet ist.

18. Baugruppe umfassend:
- ein erstes Blech (1) nach Anspruch 17 und
- ein zweites Blech,
wobei das erste Blech (1) und das zweite Blech mittels des Klebstoffs (13) zusammengefügt sind, der lokal auf mindestens einer Außenfläche (15) der Metallbeschichtung (7) des ersten Blechs (1) vorhanden ist.

19. Verwendung einer wässrigen Lösung, die eine Aminosäure umfasst, ausgewählt aus Alanin, Arginin, Asparaginsäure, Glutaminsäure, Cystein, Glycin, Lysin, Methionin, Prolin, Threonin, Valin und Mischungen derselben, wobei jede Aminosäure in neutraler Form oder in Form von Salz vorhanden ist, die wässrige Lösung frei von einer Zusammensetzung ist, die ein Metall der Gruppe IIIB oder der Gruppe IVB enthält, zur Verbesserung der Verträglichkeit mit einem Klebstoff (13), wobei mindestens ein Teil einer Außenfläche (15) einer Metallbeschichtung (7) mindestens eine Fläche (5) eines Substrats (3) aus Stahl bedeckt, wobei die Metallbeschichtung (7) mindestens 40 Gew.-% Zink umfasst.

## Claims

1. A method for preparing a metal sheet (1) comprising at least the steps of:
- providing a steel substrate (3), at least one face (5) of which is coated with a metal coating (7) comprising at least 40% by weight of zinc,
- applying on the outer surface (15) of the metal coating (7) an aqueous solution comprising an amino acid selected from among alanine, arginine, aspartic acid, cysteine, lysine, methionine, proline, threonine, valine, and a mixture thereof, each amino acid being in a neutral or salt form,
the aqueous solution being free of compound comprising a metal from the group IIIB or from the group IVB, and
the mass percentage as dry extract of the amino acid in neutral or salt form or of the mixture of amino acids in neutral or salt forms in the aqueous solution being greater than or equal to 50%, preferably greater than or equal to 75%.

2. The method according to claim 1, comprising a preliminary step for preparing the steel substrate (3), at least one face (5) of which is coated with a metal coating (7), selected from among hot galvanization and electro-zinc-plating of the steel substrate (3).

3. The method according to any of claims 1 to 2, wherein the metal coating (7) is to be selected from a zinc coating GI, a zinc coating GA, a zinc and aluminum alloy, a zinc and magnesium alloy and a zinc, magnesium and aluminum alloy, preferably the metal coating (7) comprises between 0.1 and 10% by weight of Mg and optionally between 0.1 and 20% by weight of Al, the remainder of the metal coating being Zn, the inevitable impurities and optionally one or several additional elements selected from among Si, Sb, Pb, Ti, Ca, Mn, Sn, La, Ce, Cr, Ni or Bi.

4. The method according to one of the preceding claims, wherein the amino acid is selected from among alanine, aspartic acid, cysteine, methionine, proline, threonine, valine and a mixture thereof, each amino acid being in a neutral or salt form, preferably the amino acid is selected from among proline in a neutral or salt form, cysteine in a neutral or salt form, and a mixture thereof, preferably proline in a neutral or salt form.

5. The method according to any of claims 1 to 4, wherein the steel substrate (3) at least one face (5) of which is coated with a metal coating (7) was prepared by hot galvanization and the amino acid is selected from among alanine, proline, threonine and valine, and a mixture thereof, each amino acid being in a neutral or salt form.

6. The method according to one of the preceding claims, wherein the aqueous solution comprises from 1 to 200 g/L of amino acid in a neutral or salt form or of a mixture of amino acids in neutral or salt forms or from 10 to 1,750 mmol/L of amino acid in a neutral or salt form or a mixture of amino acids in neutral or salt forms.

7. The method according to one of the preceding claims, wherein the aqueous solution has a pH comprised between a pH equal to the [isoelectric point of the amino acid - 3] and a pH equal to the [isoelectric point of the amino acid + 1], preferably comprised between a pH equal to the [isoelectric point of the amino acid - 3] and a pH equal to the [isoelectric point of the amino acid -1].

8. The method according to one of the preceding claims, wherein the aqueous solution is applied at a temperature comprised between 20 and 70°C and/or wherein the solution is applied for a period comprised between 0.5s and 40s on the outer surface (15) of the metal coating (7).

9. The method according to one of the preceding claims, wherein the solution is applied by roll coating.

10. The method according to one of the preceding claims, comprising, after the application step on the outer surface (15) of the metal coating (7) of an aqueous solution comprising an amino acid, a drying step, preferably carried out by subjecting the metal sheet (1) to a temperature comprised between 70 and 120°C for 1 to 30 seconds.

11. The method according to one of the preceding claims, comprising, after the application step on the outer surface (15) of the metal coating (7) of an aqueous solution comprising an amino acid and the optional drying step, a step for applying a film of grease or oil on the outer surface (15) of the coating (7) coated with a layer comprising an amino acid or a mixture of amino acids.

12. The method according to one of the preceding claims, comprising, after the application step on the outer surface (15) of the metal coating (7) of an aqueous solution comprising an amino acid, the optional drying step and the optional step for applying a film of grease or oil, a step for shaping the metal sheet (1), preferably by drawing.

13. The method according to one of the preceding claims, comprising, after the application step on the outer surface (15) of the metal coating (7) of an aqueous solution comprising an amino acid, the optional drying step, the optional step for applying a film of grease or oil, the optional step for shaping the metal sheet (1), a step for applying locally an adhesive (13) on at least one outer surface (15) of a metal coating (7) coated with a layer comprising an amino acid or a mixture of amino acids.

14. A metal sheet (1) which may be obtained by a method according to any of claims 1 to 11.

15. The metal sheet (1) according to the preceding claim, wherein at least one portion of at least one outer surface (15) of the metal coating (7) is coated with a layer comprising from 0.1 to 200 mg/m² of amino acid in a neutral or salt form or a mixture of amino acids in neutral or salt forms.

16. The metal sheet (1) according to claim 14 or 15, wherein at least one portion of at least one outer surface (15) of the metal coating (7) is coated with a layer comprising from 50 to 100% by weight of amino acid in a neutral or salt form, or of a mixture of amino acids in neutral or salt forms.

17. The metal sheet (1) according to any of claims 14 to 16 which may be obtained by the method according to claim 13, comprising an adhesive (13) locally present on at least one outer surface (15) of the metal coating (7) coated with a layer comprising an amino acid or a mixture of amino acids.

18. An assembly comprising:
- a first metal sheet (1) according to claim 17, and
- a second metal sheet,
the first metal sheet (1) and the second metal sheet being assembled via the adhesive (13) locally present on at least one outer surface (15) of the metal coating (7) of the first metal sheet (1).

19. The use of an aqueous solution comprising an amino acid selected from among alanine, arginine, aspartic acid, glutamic acid, cysteine, glycine, lysine, methionine, proline, threonine, valine, and a mixture thereof, each amino acid being in a neutral or salt form, the aqueous solution being free of compound comprising a metal from the group IIIB or from the group IVB, in order to improve the compatibility, with an adhesive (13), of at least one portion of an outer surface (15) of a metal coating (7) coating at least one face (5) of a steel substrate (3), wherein the metal coating (7) comprises at least 40% by weight of zinc.
